# EUROPÄISCHE PATENTSCHRIFT

(11) **EP 1 017 161 B1**
(45) Veröffentlichungstag und Bekanntmachung des Hinweises auf die Patenterteilung: **02.11.2005**
(21) Anmeldenummer: 99125762.7
(22) Anmeldetag: 23.12.1999
(51) Int. Cl.: H02P 7/63

(54) **Anordnung in einem Regelkreis zur Ansteuerung eines Motors eines Hilfsantriebs in einem Fahrzeug**
Arrangement in a control circuit to drive the motor of an auxiliary drive in a vehicle
Agencement dans un circuit de régulation pour commander un moteur d'entraînement auxiliaire dans une véhicule

(30) Priorität: 29.12.1998 DE 29823179 U
(43) Veröffentlichungstag der Anmeldung: 05.07.2000
(73) Patentinhaber: SCHUNK Motorensysteme GmbH, D-27777 Ganderkesee (DE)
(72) Erfinder: Lasthaus,Peter, 28542 Sande (DE); Kowalsky,Rolf, 90489 Nürnberg (DE)
(74) Vertreter: Stoffregen, Hans-Herbert

(56) Entgegenhaltungen:
- EP-A- 0 492 286
- EP-A- 0 657 988
- EP-A- 0 811 528
- WO-A-98/36956
- DE-A- 19 616 753
- FR-A- 2 644 306
- PATENT ABSTRACTS OF JAPAN vol. 008, no. 209 (E-268), 22. September 1984 (1984-09-22) & JP 59 092794 A (FANUC KK), 29. Mai 1984 (1984-05-29)

## Beschreibung

Die Erfindung bezieht sich auf eine Anordnung zur Ansteuerung eines Motors eines Hilfsantriebs in einem Fahrzeug gemäß den Merkmalen des Oberbegriffs des Anspruchs 1.

Eine Anordnung dieser Art ist aus der FR 2 644 306 A1 bekannt. Bei der bekannten Anordnung handelt es sich um die Ansteuerung eines elektrischen Kfz-Motors, wobei einem Mikrocontroller über eine Steuerung wie beispielsweise ein Gaspedal Sollwertdaten zugeführt werden, der diese sodann verarbeitet und den elektrischen Kfz-Motor entsprechend den zugeführten Solldaten ansteuert. Eine Rückkopplung erfolgt über den Bediener, der entsprechend der gewünschten Geschwindigkeit das Gaspedal bedient. Die Erfassung von von den Betriebsdaten des Motors entsprechend den Istweridaten ist nicht vorgesehen. Auch ist die Sollwertvorgabe unmittelbar mit dem Mikrocontroller verbunden. Eine Anpassung der Anordnung an Motoren unterschiedlicher Bauart ist nicht vorgesehen.

Die Europäische Patentanmeldung EP 0 811 528 A2 bezieht sich auf eine Ansteuereinrichtung zum Ansteuern elektrischer und/oder elektronischer Komponenten eines Kraftfahrzeugs. Diese umfasst eine Zentralelektronik, der über einen Dateneingang eine Mehrzahl von Daten zuleitbar sind, welche in der Zentralelektronik verarbeitbar und von der über eine gemeinsame Leitung eine Mehrzahl von Komponenten Ansteuerdaten zuleitbar sind. Die gemeinsame Leitung ist ein bidirektionaler Datenbus, über den Ausgangsdaten an die Komponenten anderer Komponenten und/oder Zentralelektronik zur Verarbeitung zuleitbar sind. Die Ansteuerung eines Motors eines Hilfsantriebs ist der Offenbarung jedoch nicht zu entnehmen.

Aus der JP 59092794 A1 ist eine Anordnung zur Ansteuerung eines Drehstrommotors bekannt. Dabei ist in der Energiezuleitung zu den Leistungsendstufen ein Stromwandler angeordnet, der mit einem Eingang eines Analog-Digital-Umsetzers in einem Mikrocontroller verbunden ist. Auch ist ein mit der Welle des Motors verbundener Drehstellungssensor mit einem Eingang des Mikrocontrollers verbunden. Die Einbindung der Anordnung in ein Feldbussystem und deren flexible Anpassung an verschiedene Motorarten ist auch aus der JP 59092794 nicht zu entnehmen.

Aus der EP 0 492 286 A 1 ist eine Stromversorgung für Kraftfahrzeuge bekannt, welche Verbraucher aufweist, welche über Spannungswandler aus dem auf Betriebsspannung liegenden Bordnetz zum Teil mit einer demgegenüber höheren Mittelvolt-Spannung und zum Teil mit einer noch höheren Hochvolt-Spannung zu betreiben sind. Hinweise zur Regelung von Motoren unterschiedlicher Bauart eines Hilfsantriebs in einem Fahrzeug über einen Feldbus sind dieser Entgegenhaltung nicht zu entnehmen.

In Kraftfahrzeugen vorhandene Hilfsantriebe sind beispielsweise Bremssysteme, Benzinpumpen, Servolenkungen, Sitz- und Fensterverstellungen, Scheibenwischer und dergleichen.

Für manche dieser Hilfsantriebe ist eine Drehzahlregelung zweckmässig. Als Motoren für Drehzahlregelungen stehen zum Beispiel folgende Alternativen zur Verfügung: bürstenbehaftete Gleichstrommotoren, bürstenlose Gleichstrommotoren, Wechsel- oder Drehstrommotoren, Schrittmotoren und geschaltete Reluktanzmaschinen. Für die Drehzahlregelungen sind Ansteuerschaltungen mit Leistungsteilen notwendig.

Der Erfindung liegt das Problem zu Grunde, eine für verschiedene Motorarten geeignete Anordnung zur Ansteuerung eines Motors eines Hilfsantriebs bereitzustellen, die mit geringem Aufwand an die Betriebsbedingungen des jeweils an einem Hilfsantrieb eingesetzten Elektromotors angepasst werden kann.

Das Problem wird bei einer Anordnung der eingangs beschriebenen Art erfindungsgemäss durch die Merkmale des kennzeichnenden Teils des Anspruchs 1 gelöst.

Die erfindungsgemässe Ansteueranordnung lässt sich als Teilnehmer an vorhandene Feldbussysteme anschliessen, über die Sollwertvorgaben übertragen werden, die insbesondere mit Stellschaltern oder Potentiometern an entsprechenden Teilnehmern des Feldbussystems eingegeben werden. Der Verdrahtungsaufwand für den Anschluss des die Ansteuerschaltung aufweisenden Teilnehmers ist gering. Es können Transceiver verwendet werden, die für das jeweilige Feldbussystem kommerziell verfügbar sind. Der Mikrocontroller enthält Software oder Firmware, mit der ein Regelalgorithmus an die jeweiligen Parameter des Antriebsmotors auf einfache Weise angepasst werden kann. Der Wechselrichter ist austauschbar mit dem Mikrocontroller verbunden, wodurch eine einfache und schnelle Anpassung an die Motorart, zum Beispiel einen einphasigen oder mehrphasigen Motor möglich ist.

Insbesondere ist an Ausgänge des Mikrocontrollers, an denen in digitaler Form Signale, die sich auf die Pulsweitenmodulation beziehen, ausgebbar sind, ein Pulsweitenmodulator angeschlossen, mit dem die Leistungsendstufen verbunden sind. Als Pulsweitenmodulator kann ein kommerziel erhältlicher Brückentreiber mit Bootstraps-Schaltung für Transistoren verwendet werden.

Als Feldbus ist zweckmässigerweise der CAN-Bus vorgesehen. Die Feldbusintegration geschieht mit dem Controller-Area-Network:

Bei einer bevorzugten Ausführungsform ist ein in der Energiezuleitung zu den Leistungsendstufen vorgesehener Stromwandler mit dem Eingang eines Analog-/Digital-Umsetzers des Mikrocontrollers verbunden. Aus den Strom-Istwerten beziehungsweise den Mittelwerten der Strom-Istwerte berechnet der Mikrocontroller drehmomentproportionale Werte. Für die Berechnung der Drehzahl-Istwerte wird dabei vorausgesetzt, dass der Wirk-Strom dem Drehmoment des Motors proportional ist. Aus der aufgenommenen Leistung kann mittels des Drehmoments die Drehzahl bestimmt werden.

Bei einer anderen Ausführungsform ist ein mit der Welle des jeweiligen Motors verbundener Drehstellungssensor mit einem Eingang des Mikrocontrollers verbunden. Bei dieser Ausführungsform steht bei der Drehung des Sensors die Drehzahl dem Mikrocontroller als Istwert der Regelgrösse unmittelbar zur Verfügung, wodurch sich Rechenaufwand einsparen lässt. Diese Ausführungsform eignet sich insbesondere für Synchronmaschinen und geschaltete Reluktanzmaschinen aber auch bürstenlose Gleichstrommaschinen.

Bei einer weiteren bevorzugten Ausführungsform sind die Leistungsendstufen des Wechselrichters über einen Hochsetzsteller mit dem Bordnetz des Fahrzeuges verbunden, dessen Spannung kleiner als die Betriebsspannung des Wechselrichters ist. Durch den Hochsetzsteller ist es möglich, Motoren für höhere Spannungen und bessere Wirkungsgrade zu verwenden. Der Hochsetzsteller erzeugt vorzugsweise aus der Bordnetzspannung von 12 V eine Spannung von 42 V.

Weitere Einzelheiten, Merkmale und Vorteile der Erfindung ergeben sich nicht nur aus den Ansprüchen und den diesen zu entnehmenden Merkmalen - für sich und/oder in Kombination -, sondern auch aus der nachfolgenden Beschreibung eines bevorzugten Ausführungsbeispiels.

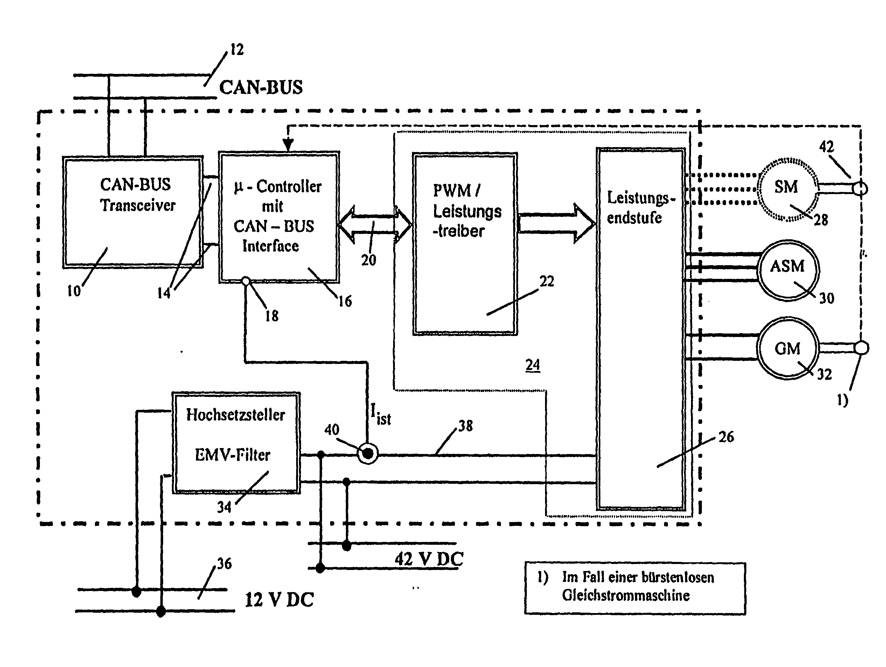

In der Zeichnung ist ein Blockschaltbild einer Anordnung in einem Regelkreis zur Ansteuerung eines Motors eines Hilfsantriebs in einem Fahrzeug dargestellt. Die Anordnung weist einen Transceiver 10 auf, der an einen Feldbus 12 angeschlossen ist, bei dem es sich insbesondere um den an sich bekannten CAN-Bus handelt, der auch im Bereich der Maschinensteuerungen in an sich bekannter Weise verwendet wird. Über den Feldbus 12 werden Daten von und zum Transceiver 10 übertragen.

Der Transceiver 10 ist über eine Schnittstelle 14 mit einem Mikrocontroller 16 verbunden, der eine Schnittstelle für den CAN-BUS aufweist. Der Mikrocontroller 16 hat wenigstens einen Eingang 18 für elektrische Messwerte. Ausgangsseitig ist der Mikrocontroller 16 über eine Schnittstelle 20 mit einem Pulsweitenmodulator 22 verbunden, der Leistungstreiber aufweist und Bestandteil eines Wechselrichters 24 ist. Der Pulsweitenmodulator ist ein Brückentreiber mit einer Bootstrap-Schaltung für Transistoren und kommerziell erhältlich. Die Leistungstreiber des Pulsweitenmodulators 22 sind mit den Steuerelektroden von Leistungsendstufen 26 verbunden, die Bestandteile des Wechselrichters 24 sind.

An die Leistungsendstufen 26 ist die Ständerwicklung des jeweiligen Motors für den Hilfsantrieb angeschlossen. Von der in der Zeichnung dargestellten Ansteuerschaltung können Motoren unterschiedlicher Art betrieben werden. In der Zeichnung sind drei Motoren dargestellt, die wahlweise gesteuert werden können. Es handelt sich um einen Synchronmotor 28, einen Asynchronmotor 30, zum Beispiel einen Käfigläufer, und einen Gleichstrommotor 32. Als Gleichstrommotor 32 kann ein bürstenloser oder bürstenbehafteter Motor verwendet werden. Wenn ein bürstenloser Gleichstrommotor vorgesehen ist, ist mit dessen Welle ein Rotorstellungssensor 33 verbunden. Um kenntlich zu machen, dass jeweils nur ein Motor vom Wechselrichter 24 gespeist wird, sind die Motoren 30 und 32 und der Rotorstellungssensor 33 in der Zeichnung gestrichelt dargestellt. Bei Drehfeldmaschinenen wird ein Pulsweitenmodulator verwendet, der periodisch für die einzelnen Phasen die Treibersignale erzeugt.

Die Leistungsendstufen 26 sind an eine Gleichspannungsquelle angeschlossen, die eine höhere als die zur Zeit übliche Bordnetzspannung in Kraftfahrzeugen hat. Vorzugsweise ist die Gleichspannung 42 V. Aus der Bordnetzspannung von 12 V wird die Gleichspannung von 42 V mit einem Hochsetzsteller 34 erzeugt, der auch ein nicht näher dargestelltes EMV-Filter hat, um störende Oberwellen vom Bordnetz 36 fernzuhalten.

In einer Speiseleitung 38 für die Stromversorgung der Leistungsendstufen 26 befindet sich ein Stromwandler 40, der sekundärseitig mit dem Eingang 18 des Mikrocontrollers 16 verbunden ist. Über den Stromwandler 40 werden die Istwerte des dem Wechselrichter zugeführten Stroms gemessen. Bei gleichbleibender Speisespannung von zum Beispiel 42 V Gleichspannung kann hieraus die vom Antrieb verbrauchte Leistung bestimmt werden. Die Strom-Istwerte werden von einem nicht näher dargestellten Analog-/Digital-Wandler in Mikrocontroller 16 in digitale Stromwerte umgesetzt. Werden Motoren verwendet, deren Drehmomente dem zugeführten Wirk-Strom proportional sind, dann kann aus der Leistung und dem Drehmoment die Drehzahl des Motors bestimmt werden, die mit der im Mikrocontroller 16 gespeicherten Soll-Drehzahl zur Bestimmung der Regelabweichung verglichen wird. Im Mikrocontroller 16 ist ein Regelalgorithmus gespeichert, der zum Beispiel P-, I-, oder PT-Verhalten erzeugt.

Die Drehzahl-Sollwerte werden der Ansteuerschaltung über den CAN-Bus 12 von einem Teilnehmer vorgeben, der insbesondere Stellschalter oder Potentiometer für die Sollwert-Eingabe hat. Alternativ können die Drehzahlsollwerte auch von einem mit dem CAN-BUS verbundenen Hauptrechner im Kraftfahrzeug ausgegeben werden. Es ist aber auch möglich, an die Baugruppe, die den Mikrocontroller 16 aufweist, Stellschalter oder Potentiometer anzuschließen, mit denen die Sollwerte direkt eingegeben werden können.

Während der Transceiver 10 und der Mikrocontroller 16 unabhängig von der Art des jeweiligen Motors vorhanden sind, werden die Anzahl der Leistungstreiber 26 und der Treiberbausteine auf die jeweils vorhandene Wicklung oder die Wicklungen des Motors abgestimmt. Die Nennleistung der Leistungtreiber 26 wird an die Motornennleistung angepasst, die zum Beispiel im Bereich bis zu 1 KW liegen kann. Die Motoren können mit einem Drehstellungssensor versehen sein.

In der Zeichnung sind ein Drehstellungssensor 42 in Verbindung mit dem Synchronmotor 28 und ein Drehstellungssensor 33 in Verbindung mit dem Gleichstrommotor 32 dargestellt. Der Drehstellungssensor 42 ist zum Beispiel an der Welle des Synchronmotors 28 befestigt. Die Abtaster des Drehstellungssensors 42 bzw. 33 sind über Signalanpassungsschaltungen, die nicht näher dargestellt sind, an Eingänge für digitale Werte des Mikrocontrollers 16 angeschlossen.

Der Mikrocontroller 16 berechnet aus den Drehzahl-Sollwerten und der Regelabweichung die Impulsperiode und Impulsweite der an die Motorwicklung oder Motorwicklungen angelegten Spannungssignale. Der Pulsweitenmodulator setzt die vom Mikrocontroller 16 bestimmten Werte in analoge Signale um, mit denen die Leistungsendstufen 26 angesteuert werden.

Der Mikrocontroller 16 kann mit anderen Teilnehmern am Feldbus 12 nach z. B. ISO 11 898 Daten austauschen.

Die vorstehend beschriebene Anordnung ist insbesondere als Steckbaugruppe ausgebildet, wobei die für die Anpassung an die jeweilige Motorart vorgesehenen Teile auswechselbar ausgebildet sind.

## Patentansprüche

1. Anordnung zur Ansteuerung eines Motors (28, 30, 32) eines Hilfsantriebs in einem Fahrzeug, umfassend einen nach einem eingebbaren Regelalgorithmus arbeitenden Mikrocontroller (16), welcher eine erste Schnittstelle (14) zur Verbindung mit Sollwertdaten vorgebenden Einheiten und eine zweite Schnittstelle (20) zur Verbindung mit einem Wechselrichter (24) zur Ansteuerung des Motors (28, 30, 32) aufweist,
**dadurch gekennzeichnet,**
**dass** die erste Schnittstelle (14) des Mikrocontrollers (16) über einen Transceiver (10) für den Empfang von Solldaten und das Senden von Daten von und zu einem Feldbus (12) verbunden ist,
**dass** der Mikrocontroller (16) wenigstens einen Eingang (18) für elektrische Messwerte aufweist, der mit einem Messwertgeber (40) verbunden ist, der vom Betriebszustand des jeweiligen Motors (28, 30, 32) abhängige Istwertdaten erzeugt, und
**dass** mit dem Regelalgorithmus Signale zur Pulsweitenmodulation des dem Mikrocontroller (16) nachgeschalteten, austauschbaren Wechselrichters erzeugbar sind, dessen Leistungsendstufen (26) mit Wicklungen des jeweiligen Motors (28, 30, 32) verbunden sind.

2. Anordnung nach Anspruch 1,
**dadurch gekennzeichnet,**
**dass** an Ausgänge des Mikrocontrollers (16), an denen in digitaler Form Signale, die sich auf die Pulsweitenmodulation beziehen, ausgebbar sind, ein Pulsweitenmodulator (22) angeschlossen ist, mit dem die Leistungsendstufen (26) verbunden sind.

3. Anordnung nach Anspruch 1 oder 2,
**dadurch gekennzeichnet,**
**dass** als Feldbus (12) der CAN-BUS vorgesehen ist.

4. Anordnung nach mindestens einem der vorhergehenden Ansprüche,
**dadurch gekennzeichnet,**
**dass** ein in der Energiezuleitung zu den Leistungsendstufen (26) angeordneter Stromwandler (40) mit dem Eingang eines Analog-/Digital-Umsetzers im Mikrocontroller (16) verbunden ist.

5. Anordnung nach mindestens einem der Ansprüche 1 bis 3,
**dadurch gekennzeichnet,**
**dass** ein mit der Welle des jeweiligen Motors (28, 30, 32) verbundener Drehstellungssensor (42; 33) mit einem Eingang des Mikrocontrollers verbunden ist.

6. Anordnung nach mindestens einem der vorhergehenden Ansprüche,
**dadurch gekennzeichnet,**
**dass** die Leistungsendstufen (26) des Wechselrichters (24) über einen Hochsetzsteller (34) mit dem Bordnetz (36) des Fahrzeugs verbunden sind, dessen Spannung kleiner als die Betriebsspannung des Wechselrichters (24) ist.

## Claims

1. Arrangement for controlling a motor (28, 30, 32) of an auxiliary drive in a vehicle, comprising a microcontroller (16) operating to an enterable control algorithm and having a first interface (14) for connection with units setting target value data and a second interface (20) for connection with an inverter (24) to control the motor (28, 30, 32),
wherein
the first interface (14) of the microcontroller (16) is connected via a transceiver (10) for receiving target value data and transmitting data from and to a field bus (12), the microcontroller (16) has at least one input (18) for electrical measured values that is connected to a measuring transducer (40) generating actual value data dependent on the operating state of the respective motor (28, 30, 32), and
signals for pulse width modulation of the replaceable inverter connected behind the microcontroller (16) are generatable with the control algorithm, the power output stages (26) of said inverter being connected to windings of the respective motor (28, 30, 32).

2. Arrangement according to Claim 1,
wherein
a pulse width modulator (22) to which the power output stages (26) are connected is connected to outputs of the microcontroller (16), at which signals relating to the pulse width modulation can be output in digital form.

3. Arrangement according to Claim 1 or Claim 2,
wherein
the CAN-BUS is provided as the field bus (12).

4. Arrangement according to at least one of the previous claims,
wherein
a current transformer (40) arranged in the energy supply line to the power output stages (26) is connected to the input of an analog/digital converter in the microcontroller (16).

5. Arrangement according to at least one of the Claims 1 to 3,
wherein
a rotational position sensor (42; 33) connected to the shaft of the respective motor (28, 30, 32) is connected to an input of the microcontroller (16).

6. Method according to at least one of the previous claims,
wherein
the power output stages (26) of the inverter (24) are connected via a boost converter (34) to the vehicle's electrical system (36), the voltage of which is lower than the operating voltage of the inverter (24).

## Revendications

1. Agencement pour commander un moteur (28, 30, 32) d'entraînement auxiliaire dans un véhicule, comprenant un microcontrôleur (16) fonctionnant suivant un algorithme de régulation pouvant être saisi et présentant une première interface (14) destinée à assurer la liaison à des unités prédéfinissant des valeurs de données théoriques et une deuxième interface (20) destinée à assurer la liaison à un onduleur (24) pour commander le moteur (28, 30, 32),
**caractérisé en ce que**
la première interface (14) du microcontrôleur (16) est reliée via un récepteur-émetteur (10) pour la réception de données théoriques et l'envoi de données depuis et vers un bus de champ (12),
le microcontrôleur (16) présente au moins une entrée (18) pour des valeurs de mesure électrique reliée à un transmetteur de signaux (40) qui génère des données de valeur réelle dépendant de l'état de fonctionnement du moteur correspondant (28, 30, 32), et
des signaux peuvent être générés pour la modulation d'impulsions en largeur de l'onduleur échangeable, branché derrière le microcontrôleur (16) et dont les étages de sortie de puissance (26) sont reliés aux bobinages du moteur correspondant (28, 30, 32).

2. Agencement selon la revendication 1,
**caractérisé en ce qu'**
un modulateur d'impulsions en largeur (22) auquel sont reliés les étages de sortie de puissance (26) est raccordé aux sorties du microcontrôleur (16) sur lesquelles des signaux se référant à la modulation d'impulsions en largeur peuvent être émis sous forme numérique.

3. Agencement selon la revendication 1 ou 2,
**caractérisé en ce que**
le BUS CAN est prévu en tant que bus de champ (12).

4. Agencement selon l'une quelconque des revendications précédentes,
**caractérisé en ce qu'**
un transformateur d'intensité (40) disposé dans la conduite d'alimentation en énergie conduisant aux étages de sortie de puissance (26) est relié à l'entrée d'un convertisseur analogique/numérique dans le microcontrôleur (16).

5. Agencement selon au moins l'une des revendications 1 à 3,
**caractérisé en ce qu'**
un capteur de position de rotation (42 ; 33) relié à l'onde du moteur respectif (28, 30, 32) est raccordé à une entrée du microcontrôleur.

6. Agencement selon au moins une quelconque des revendications précédentes,
**caractérisé en ce que**
les étages de sortie de puissance (26) de l'onduleur (24) sont reliés via un régulateur de position maximum (34) au réseau de bord (36) du véhicule dont la tension est inférieure à la tension de fonctionnement de l'onduleur (24).
